Europäisches Patentamt

European Patent Office

Office européen des brevets

(11) Publication number: **0 292 617**
**B1**

## (12) EUROPEAN PATENT SPECIFICATION

(45) Date of publication of patent specification: **09.01.91**

(21) Application number: **87200997.2**

(22) Date of filing: **27.05.87**

(51) Int. Cl.⁵: **F 16 B 7/04**

(54) Connecting device for securing a girder to a column at a chosen level.

(43) Date of publication of application:
**30.11.88 Bulletin 88/48**

(45) Publication of the grant of the patent:
**09.01.91 Bulletin 91/02**

(84) Designated Contracting States:
**BE CH DE FR GB LI SE**

(56) References cited:
**CH-A- 340 675**
**DE-A-2 533 417**
**DE-A-3 438 521**
**FR-A-2 311 954**
**US-A-2 523 785**
**US-A-3 108 828**

(73) Proprietor: **Middendorp, Cornelis Johannes**
**Jacobus**
**Zuidweg 33c**
**NL-2671 MN Naaldwijk (NL)**

(72) Inventor: **Middendorp, Cornelis Johannes**
**Jacobus**
**Zuidweg 33c**
**NL-2671 MN Naaldwijk (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

This invention relates to a tying device for fastening a beam to a pillar at a selected height, comprising a substantially tubular member which is slidably displaceable along the length of the pillar and has a snap clamp secured thereon forming a receiving slot for the beam which is to be received therein so that said tubular member is clamped onto the pillar.

A tying device of this type is disclosed in U.S. patent specification 2,523,785.

The tying device as disclosed therein has a snap clamp provided with a prominent paunchy receiving slot forming a fitting recess for the beam, and the clamping force is there provided so that said receiving slot is divided into two parts which are secured, at a biasing angle with respect to each other, one to each side of the tubular member which is also divided, i.e. slit longitudinally so that when the beam is snapped in said divided receiving slot the two parts thereof are rotated one towards the other to become aligned and thus forcing the two sides of said slit tubular member one towards the other and thus clamping said tubular member onto the pillar.

This divided dual structure of said tubular member as well as said snap clamp has the disadvantage that it is rather bulky and cannot provide an optimum clamping force under the work load.

The aim is to obviate said disadvantage and shortcoming by providing a more rational tying method, based on a new form of fastening device, and for this purpose the present invention is characterized in that snap clamp has a clamping leg secured at the bottom side of said tubular member extending upwards wedgewise and forming a receiving slot which is constructed so that the beam, under the work load imposed thereon, assumes a downwardly forced biased position with respect to its unloaded position of repose therein whereby the beam will be fixedly clamped onto the pillar, and in that for an additionally exerted increased clamping force a clamping piece of a substantially L-shape, in an embodiment as a friction producing material, with its roundset upper part of the long leg of the L is to be forced over the snap clamp for a close interference fit by cooperation with an oppressing face formed on the inside of the short leg of the L, while at the end of the short leg of the L an abutment is provided, acting as a hook-on leg and arresting the snap clamp in the operation of the clamping piece.

This novel tying device is much smaller of structure and more rational in its action and will provide a superior clamping force.

Under its own weight and under the load carried by it the beam is particularly rigidly clamped on the pillar but by first removing the locking clamping piece therefrom and then the oppression or bias provided by itself the tying device is in each instance readily to be released and to be displaced along the pillar.

In view of its form-recovery and so as to provide a proper gripping possibility, the clamping piece is furthermore characterized by a handle portion projecting outwardly at the corner between the legs of the L; and according to an additional aspect it features abutments, preferably in the form of ribs or an upset edge, on the snap clamp as a seat for the clamping piece to be secured thereto, which, due to this, cannot slide downwards and get loose from the downwardly tapered clamping member.

Said features provide a particularly efficient tying device which is adapted to exert a strong clamping force and, due to its rigid character, may be of use when erecting a scaffold in the building industry.

The invention is described in more detail in view of the illustrative embodiments thereof as represented in the drawing.

Figure 1 is a lateral view of one embodiment of the here proposed tying device for fastening a beam on a pillar;

Figure 2 shows a clamping piece to be mounted on the tying device of Figure 1;

Figure 3 is a top view of the clamping device;

Figure 4 shows yet another embodiment in which the sleeve and a locking band which is mounted thereon have a slight taper and/or unroundness so as to provide by means of their oppression or bias a strong oppressing force for securing it on the pillar;

Figure 5 shows in top view a slight unroundness of the sleeve and locking band as represented in Figure 4; and

Figure 6 shows a further embodiment variation, with tapered inner and outer sleeves and locking band.

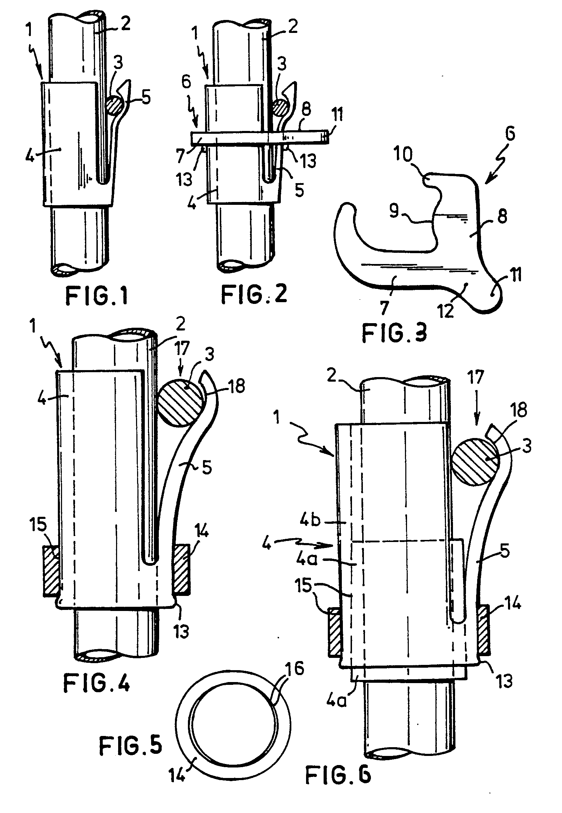

The tying device 1 as represented in Figure 1 preferably consists of a stainless material such as plastic and is slid onto a pillar 2, whereupon a beam 3 is forced in the snap clamp 5 which is connected to a sleeve 4. In the illustrative embodiment of Figure 1 the snap clamp 5 has a receiving slot in which the beam 3 as represented, while oppressing it, is clamped onto the pillar 2. For performing a height adjustment one simply grabs the sleeve 4 and slides it upwards, unclamping the beam 3 then and sliding it along with the sleeve 4 along the pillar 2 so as to adjust the height position anew at the desired level.

Figure 2 furthermore shows in a lateral view a clamping piece 6 mounted on the snap clamp 5 so as to exert a strong clamping force thereon, which is so strong that the tying device is suitable for scaffolding on building sites as well.

Figure 3 shows the substantially L-shaped clamping piece 6 in top view. The long leg of the L is indicated at 7 and the short leg at 8. The long leg 7 is roundset at the top and adapted to be forced over the snap clamp 5 with the beam 3 clamped therein for a close interference fit in cooperation with an oppressing face 9 provided on the inside on the short leg 8 of the L.

On the end of the short leg 8 of the L an abutment 10 is formed, acting as a hook-on leg when applying the clamping piece 6 on the snap clamp 5 and arresting said snap clamp 5 in the operation of the clamping piece 6.

At 11 is indicated a handle-piece at the corner 12 between the two legs 7 and 8 of the L, which also lends more form recovery to the clamping piece 6 which in its preferred embodiment is manufactured from a plastic material that adheres under friction, such as Teflon, and is adapted to exert a firm grip on the snap clamp 5 by friction.

In Figure 2 it is observed that the snap clamp 5 is provided with the necessary abutments such as the ribs 13 as shown in the drawing, which are adapted to function as a seat for th clamping piece 6 to be secured thereon so that it cannot slide downwards and get loose.

It is remarked that the invention is in no way restricted to the uses which are represented here and is subject to modifications in its configuration within the scope of the invention.

Two of the here proposed clamping pieces may, mounted on a pillar in mated opposed relationship, in combination with a spreading clip which is arranged between the grip legs of the clamping pieces, which for that purpose are provided with hook-in eyes, form a pair of jaw shears on which a substantial load can be supported.

Figures 4 to 6 show yet two other possible embodiments.

In the tying device 1 as represented in Figure 4 the sleeve 4 and locking band 14 having a slight taper 15 and/or unroundness 16 for prestressing and firmly pressing it on the pillar 2.

The non-circular locking band or sleeve 14 which may consist of a rotary sleeve or a helical sleeve as well, provides a stress on the clamping leg of the snap clamp 5. In this respect it can be remarked that, as schematically shown at 16 in Figure 5, unroundness actually is a form of taper peripherally instead of axially, which unroundness in figure 5 is represented to a highly exaggerated extent for the sake of illustration.

It can be seen that the locking band 14 is arrested against an upset edge 13 in its lowermost terminal position.

Under the workload supported by the beam 3, as schematically indicated by arrow 17, the beam 3 will be located in a prestressed condition in the receiving slot 18 of the snap clamp 5.

The tying device as represented in Figure 6 has a sleeve 4 comprising an inner sleeve 4a and an outer sleeve 4b which, just like the locking band 14, are to be prestressed due to their taper 15.

Finally it is remarked that in order to visualize the bias, the extent of unroundness and taper and the prestressed position of the beam in the receiving slot of the snap clamp had to be represented in the drawing in a very much exaggerated manner but it should be clear that in this connection quite narrow tolerances and fits are provided which practically do not even have to be perceivable with the eye to perform their action as desired.

## Claims

1. A tying device (1) for fastening a beam (3) to a pillar (2) at a selected height, comprising a substantially tubular member (4) which is slidably displaceable along the length of the pillar (2) and has a snap clamp (5) sevured thereon forming a receiving slot (18) for the beam (3) which is to be received therein so that said tubular member (4) is clamped onto the pillar (2), characterized in that said snap clamp (5) has a clamping leg secured at the bottom side of said tubular member (4) and extending upwards wedgewise and forming a receiving slot (18) which is constructed so that the beam (3), under the work load imposed thereon, assumes a downwardly forced biased position with respect to its unloaded position of repose therein whereby the beam (3) will be fixedly clamped onto the pillar (2), and in that for an additionally exerted increased clamping force a clamping piece (6) of a substantially L-shape, in an embodiment of a friction producing material, with its roundset upper part of the long leg (7) of the L is to be forced over the snap clamp (5) for a close interference fit by cooperating with an oppressing face (9) formed on the inside of the short leg (8) of the L, while at the end of the short leg (8) of the L an abutment (10) is provided, acting as a hook-on leg and arresting the snap clamp (5) in the operation of the clamping piece (6).

2. A device according to claim 1, characterized by a handle portion (11) projecting outwardly at the corner between the legs (7, 8) of the L.

3. A device according to claim 1 or 2, characterized by abutments, preferably in the form of ribs or an upset edge (13), on the snap clamp (5) as seat for the clamping piece (6) to be secured thereon.

## Patentansprüche

1. Eine Verbindungsvorrichtung (1) zum Festlegen eines Trägers (3) auf einer gewählten Höhe auf einem Ständer (2), die einen im wesentlichen hülsenförmigen Teil (4) aufweist welcher über die Länge des Ständers (2) verschiebbar ist und eine Rastklemme (5) darauf befestigt hat, die eine Aufnahmenute (18) bildet für den darin aufzunehmenden Träger (3), so dass der genannte hülsenförmige Teil (4) auf dem Ständer (2) geklemmt wird, dadurch gekennzeichnet, dass die genannten Rastklemme (5) ein an der Unterseite des hülsenförmigen Teil (4) befestigte Klemmbein aufweist und sich keilförmig nach oben ausstreckt und eine Aufnahmenute (18) bildet, die darauf berechnet ist den Träger (3), unter die darauf wirkende Werbelastung, eine, in Hinsicht aufseine entlastete Ruhestellung herunter gedrückte Verspannungsposition einnehmen zu lassen, wobei der Träger (3) fest auf dem Ständer (2) geklemmt wird, und dadurch, dass für eine dabei ausgeübte grössere Klemmkraft ein Klemmteil (6) von einer wesentlichen L-form, in einer Ausführungsform eines Reibung erregend Materials, mit seinem gerundeten Oberteil des längen Beines (7) des Ls, über die Rastklemme (5) hingedrückt werden müss für eine dichte Klemmpassung durch Zusammenarbeit mit einer an der Innenseite des kurzen Beines (8) des Ls gebildeten Druckfläche (9), während an dem Ende des kurzen Beines (8) des Ls ein Anschlag (10) anwesend ist, der als eine Anhakbein wirkt und bei der Wirkung des Klemmteils (6) die Rastklemme (5) arretiert.

2. Eine Vorrichtung nach Anspruch 1, gekennzeichnet durch einen Griffteil, der bei der Ecke zwischen den Beinen (7, 8) des Ls nach Aussen ausstecht.

3. Eine Vorrichtung nach Anspruch 1 oder 2, gekennzeichnet durch Anschläge, vorzugsweise in die Form von Rippen oder einen aufgestauchten Rand (13), auf der Rastklemme (5) als eine Sitzung für den darauf festzusetzenden Klemmteil (6).

**Revendications**

1. Dispositif de raccordement (1) destiné à fixer une traverse (3) à un montant (2) à une hauteur choisie, comprenant un élément en substance tubulaire (4) qui peut être déplacé par coulissement le long du montant (2) et qui présente une attache à déclic (5) fixée sur cet élément et formant une fente de réception (18) pour la traverse (3) qui doit être reçue dans celle-ci, de telle sorte que l'élément tubulaire (4) soit bloqué sur le montant (2), caractérisé en ce que l'attache à déclic (5) comporte une patte de serrage fixée au bas de l'élément tubulaire (4) s'étendant vers le haut de manière cunéiforme et formant une fente de réception (18) qui est construite de telle façon que la traverse (3), sous l'effet de la charge de travail à laquelle elle est soumise, occupe une position sollicitée par force vers le bas par rapport à sa position non en charge ou position de repos dans cette fente, de sorte que la traverse (3) est bloquée par serrage sur le montant (2), et que, en vue d'exercer une force de serrage accrue supplémentaire, une pièce de serrage (6) de forme en substance en L, dans une forme d'exécution en matière produisant de la friction, doite être repoussée par la partie supérieure courbée de la branche longue (7) du L par-dessus l'attache à déclic (5) en vue d'un ajustement serré par coopération avec une face de pression (9) formée sur l'intérieur de la branche courte (8) du L, tandis qu'à l'extrémité de la branche courte (8) du L est prévu un arrêt (10) servant d'organe d'accrochage et retenant l'attache à déclic (5) lors de la mise en oeuvre de la pièce de serrage (6).

2. Dispositif suivant la revendication 1, caractérisé par une partie formant manette (11) qui s'étend vers l'extérieur au coin entre les branches (7, 8) du L.

3. Dispositif suivant la revendication 1 ou 2, caractérisé par des arrêts ayant, de préférence, la forme de nervures ou d'un bord obtenu par refoulement (13) sur l'attache à déclic (5) et formant un siège pour la pièce de serrage (6) sur lequel cette pièce repose.

EP 0 292 617 B1

FIG.1  FIG.2  FIG.3  FIG.4  FIG.5  FIG.6